# EUROPEAN PATENT APPLICATION

(11) **EP 1 732 255 A1**
(43) Date of publication of application: **13.12.2006**
(21) Application number: 06010371.0
(22) Date of filing: 19.05.2006
(51) Int. Cl.: H04H 9/00

(54) **Digital multiplex broadcasting apparatus and method**

(30) Priority: 07.06.2005 KR 20050048570
(71) Applicant: Samsung Electronics Co., Ltd., Suwon-si, Gyeonggi-Do (KR)
(72) Inventor: Seo, Dong-Uk, Cheonan-si Chungcheongnam-do (KR)
(74) Representative: Lang, Johannes

(57) **Abstract**

A multiplex broadcasting apparatus and method in a digital broadcasting system. The multiplex broadcasting apparatus and method are designed to provide a plurality of programs, as a digital multiplex broadcast, requested by a user over a single channel, so that the user can receive a plurality of desired programs by using a settop box having a single tuner while being provided with various types of multiplex broadcasts such as Picture In Picture (PIP), Perception Video Recorder (PVR) and multiroom functions by using the received programs.

## Description

### BACKGROUND OF THE INVENTION

### Field of the Invention

The present invention relates to an apparatus and a method for providing digital multiplex broadcasts, more particularly, designed to provide multiplex broadcasts by using a single tuner.

### Description of the Related Art

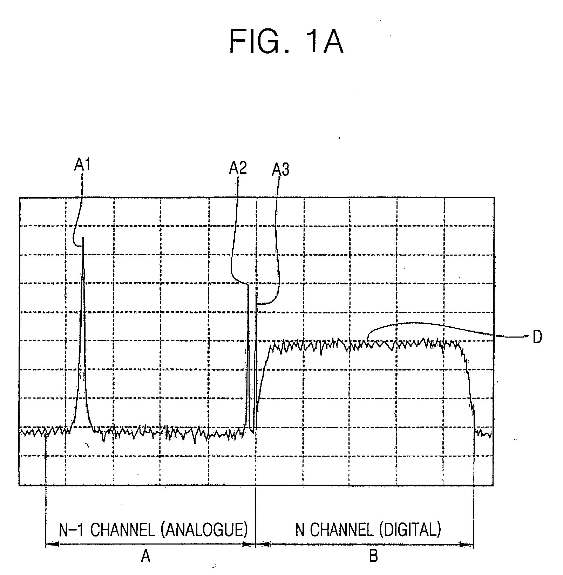

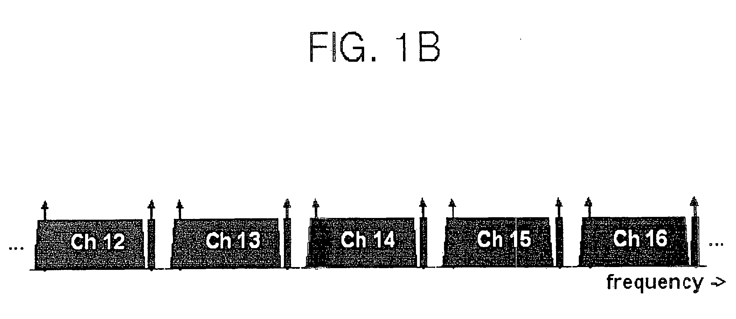

Conventionally, only analogue broadcasting systems have been provided. At present, digital broadcasting systems are being provided. A digital broadcasting system based upon digital technologies is discriminated from a conventional analogue broadcasting system. Differences between the digital broadcasting and analogue broadcasting systems will be explained with reference to FIGS. 1A and 1B.

FIG. 1A is a graph illustrating Radio Frequency (RF) spectra of analogue and digital channels.

In FIG. 1A, a reference sign A shows a RF spectrum of an analogue channel, and a reference sign B shows an RF spectrum of a digital channel. In particular, the digital channel spectrum indicates the channel power of QAM (quadrature amplitude modulation) according to a Korean Standard for Digital CATV (cable television) Transmitter/Receiver Interface. As shown in FIG. 1A, the analogue channel spectrum shows that only video and audio energies form peaks A1-A3 in one channel. Unlike the analogue channel spectrum, the digital channel spectrum shows uniform energy distribution D across its bandwidth. Based upon these characteristics, the digital broadcasting system can provide, for example, a plurality of broadcasting programs or broadcasts through one digital channel. The analogue broadcasting system, however, can provide only one program within one channel. In general, only one broadcasting frequency is allocated to one channel.

FIG. 1B is a view illustrating an example of spectrum according to channels in an analogue broadcasting system.

As shown in FIG. 1B, the analogue broadcasting system can provide only one channel per one channel bandwidth.

With an analogue channel, users can tune to one channel per 6MHz bandwidth in case of the NTSC (National Television Standards Committee) standard broadcasting as used in Korea, or an 8MHz bandwidth in case of PAL (Phase Alternation Line) standard broadcasting as used in the United Kingdom.

A digital broadcasting system has more available channels than analogue broadcasting. Besides, the feature of the digital broadcasting system is that it can provide a plurality of broadcasts with one channel as described above. This, as a result, has remarkably increased the number of broadcasts that the digital broadcasting system can provide. Thus, as digital broadcasting services have been launched, the number of digital and analogue broadcasts transmitted on ground wave, cables, satellites and so on is increasing.

As the number of broadcasts provided to users is increasing, the availability for multiplex broadcasting functions such as Picture In Picture (PIP), Perception Video Recorder (PVR), multiroom and the like is rising also.

In order to provide multiplex broadcasts, however, conventionally a broadcasting receiver, e.g., settop box (STB) (hereinafter will be referred to as "settop box"), having at least two tuners has been required. For example, for providing a PIP function, it is necessary for the settop box to have two tuners comprising a first tuner for receiving a broadcast for a main screen and a second tuner for receiving a broadcast for a subscreen.

In order to realize a multiroom function, the settop box has to have tuners corresponding to the number of rooms that it supports. These facts are because a tuner can tune to only one broadcasting frequency. Even in the digital broadcasting system where a plurality of broadcasts are allocated to a single channel, it is necessary for the settop to have a plurality of tuners for receiving broadcasts distributed in the plural channels. Table 1 below reports an example of tuner selection where multiplex broadcasts are provided according to the prior art.

**Table 1**

| Case | Audience's program selection | Broadcast channel | Tuner selection |
|---|---|---|---|
| 1 | Programs 1 and 2 | Transmission with same channel | 1 st tuner |
| 2 | Programs 1 and 2 | Transmission with same channel | 1 st and 2nd tuners |

A digital broadcasting network can provide 4 to 6 digital programs having SD (standard-definition) level image quality in one channel. Thus, in case of broadcasts in the same channel only, the digital broadcasting system can provide PIP, PVR and multiroom functions by using one tuner. This is case 1 of Table 1 above. However, even in the digital broadcasting system, different tuners as in case 2 of Table 1 above have to be used in order to receive broadcasts contained in different channels.

### SUMMARY OF THE INVENTION

The present invention has been made to solve the foregoing problems of the prior art and it is therefore an object of the present invention to provide a digital multiplex broadcasting apparatus and method capable of providing digital multiplex broadcasts by using a single tuner.

It is another object of the invention to provide a digital multiplex broadcast apparatus and method capable of realizing Picture In Picture (PIP), Perception Video Recorder (PVR) and multiroom functions by using a single tuner.

According to an aspect of the invention for realizing the above objects, there is provided an apparatus for providing multiplex digital broadcasting in a digital media center, comprising: a receiver for receiving a broadcast request message requesting a plurality of programs from a settop box; a controller for generating a channel containing all of the programs requested by the broadcast request message; and an output unit for outputting said channel to the settop box.

According to another aspect of the invention for realizing the above objects, there is provided an apparatus for providing multiplex digital broadcasting in a settop box, comprising: an input unit for receiving a broadcast selection message including a plurality of programs from a user; a tuner for tuning to channels from a Digital Media Center (DMC); and a controller for generating a broadcast request message requesting a channel containing all of the requested programs, transmitting the broadcast request message to the DMC, receiving channel information provided by the DMC in response to the broadcast request message, and controlling the tuner to tune to the channel containing all of the requested programs.

According to further another aspect of the invention for realizing the above objects, there is provided a method for providing multiplex digital broadcasting in a Digital Media Center (DMC), the method comprising steps of: receiving a broadcast request message from a settop box that requests a plurality of programs; generating a channel containing all of the programs requested by the request message; and transmitting the channel containing all of the requested programs to the settop box.

According to yet another aspect of the invention for realizing the above objects, there is provided a method for providing multiplex digital broadcasting in a settop box, the method comprising steps of: receiving a broadcast selection message from a user, the message requesting a plurality of programs and instructing an output format of the requested programs; generating a broadcast request message requesting a channel containing all of the programs requested by the broadcast selection message, transmitting the broadcast request message to a Digital Media Center (DMC), and receiving program guide information including channel information provided by the DMC in response to the broadcast request message; receiving a channel provided by the DMC based upon the broadcasting guide information; and outputting the requested programs contained in the received channel according to the requested output format.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1A is a graph illustrating RF spectra of analogue and digital channels;
FIG. 1B illustrates an example of spectra according to channels in an analogue broadcasting system;
FIG. 2A illustrates a Program Association Table used for a program guide in a digital broadcasting system;
FIG. 2B illustrates a Program Map Table used for a program guide in a digital broadcasting system;
FIG. 3 is a block diagram of a settop box;
FIG. 4 is a block diagram of a Digital Media Center (DMC) for providing digital broadcasts;
FIG. 5 is a flowchart illustrating a process for receiving multiplex broadcasts in a settop box;
FIG. 6 is a flowchart illustrating a process for transmitting multiplex broadcasts in a Digital Media Center (DMC); and
FIG. 7 is a flowchart illustrating message flows between a settop box and a Digital Media Center (DMC) according to the invention.

### DETAILED DESCRIPTION OF THE PREFERRED EMBODIMENTS

Hereinafter preferred embodiments of the invention will be described with reference to the accompanying drawings, in which well-known functions or components will not be described in detail since they may unnecessarily obscure the understanding of the invention.

The present invention has been made to support multiplex broadcasting by using a settop box having a single tuner in a digital broadcasting system so that several broadcasting programs or broadcasts desired by users can be provided with one channel. Due to following reasons, the settop box can receive the programs contained in the same channel by using the single tuner.

A digital broadcasting system can contain about 4 to 6 SD level broadcasts in one channel of 6MHz bandwidth even though the number of broadcasts may be varied according to the compression rate of an MPEG-2 stream. All of the broadcasts contained in one channel can be received by one tuner according to following reasons. To enable the settop box to provide a program desired by a user in response to user selection, there is required a process that a tuner of the settop box select and tune to a frequency of a channel containing the desired program. In case of conversion between programs contained in one channel, it is required only to change a program map table included in broadcasting guide information without tuning. That is, according to the digital broadcasting system, program conversion in one channel can be processed without a tuner.

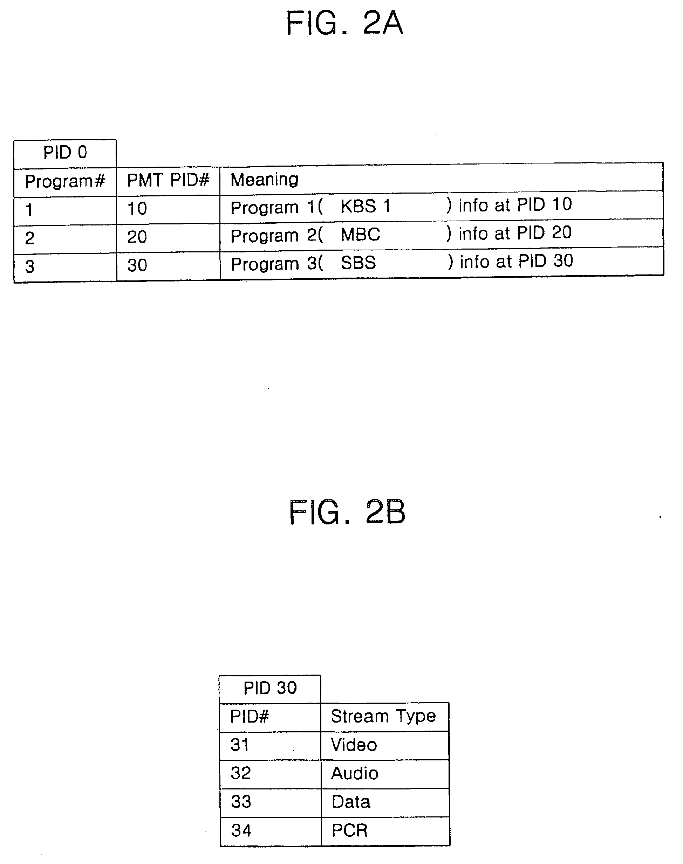

A program map table contains information such as numbers indicating programs to be provided. Program numbers in the digital broadcasting system function as channel numbers in an analogue broadcasting system. Digital broadcasts with multiplexed digital programs are identified and managed by IDs allocated to individual programs. The programs may be managed by using the tables as shown in FIGS. 2A and 2B.

FIG. 2A illustrates a Program Association Table (PAT) used for program guide in a digital broadcasting system, and FIG. 2B illustrates a Program Map Table (PMT) used for program guide in a digital broadcasting system. The Program Association Table (PAT) defines all of the programs in the transport. Each program has a Program Map Table (PMT), which defines all of the elementary Program ID's (PID's) which comprise the various program elements.

Tables shown in FIGS. 2A and 2B are similar to those that are widely used in digital broadcasting, and thus will not be described. These tables may be commonly referred to as "program guide information" for broadcasts. The program guide information may be generated and provided by a broadcasting provider (e.g., a Digital Media Center (DMC)) to a broadcasting receiver (e.g., a settop box).

Reference will now be made of the invention capable of providing all programs requested by a user in one channel so that multiplex broadcasting can be enabled with a settop box having a single tuner, in view of a digital broadcasting transmitting apparatus and of a digital broadcasting receiving apparatus.

A multiplex digital broadcasting apparatus according to the invention will be described in view of a digital broadcasting receiver. A settop box is adopted as an example of the digital broadcasting receiver.

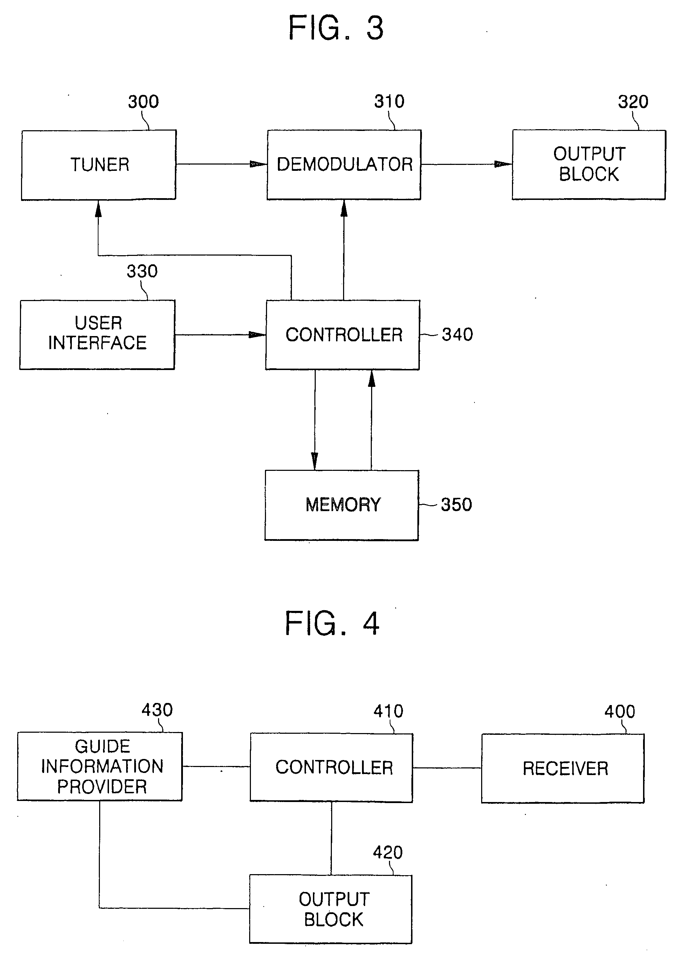

FIG. 3 is a block diagram of a settop box.

As shown in FIG. 3, a multiplex broadcasting unit of the settop box may include several components such as a tuner 300, a demodulator 310, an output block 320, a user interface 330, a controller 340 and a memory 350.

The tuner 300 and the demodulator 310 of these components are included in a receiver of the settop box. The receiver uses the tuner 300 and the demodulator 310 to receive digital broadcast messages sent from a digital broadcast transmitter and to convert the messages into a format that can be provided to a user. In the following description of the invention, the demodulator 310 will not be described. Strictly speaking, the function of the tuner 300 may be referred to as tuning to select channels. However, the function of the tuner 300 will be expressed as "receiving" only. This is caused by the fact that the tuner 300 is a component of the receiver, the function of the tuner 300 is one of receiving functions, and there is no possibility that the function of the tuner 300 may be confused, as widely known.

The output block 320 serves to provide output messages to a display unit (e.g., a TV and a monitor) so that a user can be provided with a received program.

The user interface 330 receives a program selection message from the user, which indicates a program requested by the user and an output type of the requested program. Of course, various user input messages other than the program selection messages may be inputted via the user interface 330.

The memory 350 stores broadcasting-related information that includes program guide information as shown in FIGS. 2A and 2B. In general, the memory 350 comprises a flash memory.

The controller 340 controls the components of the settop box in order to receive broadcasts. In particular, when a program selection message requesting a plurality of programs is received by the user interface 330, the controller 340 generates and sends a broadcast request message to a digital broadcast transmitter, requesting the digital broadcast transmitter to provide a channel containing all of the requested programs. In this case, the broadcast request message sent by the settop box to the digital broadcast transmitter includes at least identification information for identifying the settop box and program information for the requested programs.

In the meantime, upon receiving information for the channel containing the requested programs, the controller 340 can tune to an allocated channel and confirm program ID and so on. After confirming again whether or not service is available, the controller 340 can provide service. If the programs allocated to the channel are different from those requested by the user owing to errors in the digital broadcast transmitter, the controller 340 can send a broadcast request message again to the digital broadcast transmitter. The tuning may be executed by the tuner 300. Upon acquiring any information from the program guide information, the controller 340 provides the information to the tuner 300 so that the tuner 300 can execute the required tuning.

Of course, if a channel containing all of the programs requested by the program selection message is being provided already, the controller 340 can receive and provide this channel to the user. Accordingly, before generating and sending the program request message, the controller 340 generally searches existing channels to find a channel containing all of the requested programs. In this case, the search can be executed by using the received program guide information. As a map in use for the confirmation of program information is previously referred to as a program map, a map in use for the confirmation of channel information can be referred to as a channel map. The program map, the channel map and the like can be contained in the program guide information.

Reference will now be made of an apparatus for providing multiplex digital broadcasting in a digital broadcast transmitter. A Digital Media Center (DMC) will be taken as an example of the digital broadcast transmitter hereinafter.

If, while sending broadcasting according to a channel map, the DMC receives a broadcast request message, requesting a plurality of programs, from the settop box, it allocates the requested programs to a channel. The DMC generates a channel map containing channel information of a channel to which the requested programs are allocated, and then gets ready for sending. Of course, if there is not an idle channel, the DMC is required to able to inform the settop box that service is unavailable. If there is an idle channel, the DMC allocates the requested programs to the idle channel, informs sending to the settop box, which has requested the programs, and starts sending.

The structure of the DMC for providing multiplex digital broadcasting will now be described with reference to the appended drawing.

FIG. 4 is a block diagram of a DMC for sending digital broadcasts.

As shown in FIG. 4, the DMC includes components such as a receiver 400, a controller 410, an output block 420 and a guide information provider 430.

The receiver 400 serves to receive various messages from the settop box. The messages include a broadcast request message for requesting a plurality of programs that is used in this invention. The receiver 400 outputs the received messages to the controller 410. In the invention, the controller 410 of the DMC, particularly upon receiving the plurality of requested programs from the settop box, generates a channel containing all of the requested programs and provides this channel to the output block 420.

The output block 420 sends the generated channel to the settop box.

The guide information provider 430 generates program guide information for broadcasting containing channel information and program information for broadcasting provided by the DMC, and then provides the program guide information to the settop box. The program guide information can be transmitted to the settop box through a transmission path for broadcast channels or through another transmission path different from the transmission path for broadcast channels according to the type of a corresponding digital broadcasting system. Detailed description thereof will be omitted.

Before generating a channel containing all of the requested programs, the controller 410 can search currently provided channels to find a channel containing all of the requested programs. If there is a corresponding channel, the controller 410 transmits a message to the settop box, informing the settop box to receive the corresponding channel, without having to generate a new channel.

In order to generate a channel containing all of the requested programs, the controller 410 searches for an idle channel and allocates all of the requested programs to the found idle channel. Upon generating the channel containing all of the requested programs, the controller 410 controls the guide information provider 430 so that the information of the generated channel can be provided to the settop box. If it is judged that no idle channel is available, the controller 410 transmits a service unavailable message informing that the requested programs are unavailable to the settop box.

The controller 410 may generate a channel containing all of the requested programs through relocation of previous channels. It is possible to carry out this relocation by exchanging programs allocated to existing channels with one another, further allocating any missing one of requested programs to a channel containing some of the requested programs in order to increase allocated programs, or removing unrequested programs from a channel containing some of requested programs together with the unrequested programs to reduce the number of allocated programs and allocating other missing programs to the channel. With the channel relocation, it is possible to generate a channel containing all of the requested programs even though there is no idle channel. However, such channel relocation is not recommended since this gives annoyance to correct all of existing channel information.

It has been described hereinbefore that both of the settop box and the DMC search the previously provided channels to find a channel containing all of the programs requested by the user. However, such channel search can be carried out sufficiently by one of the settop box and the DMC. In particular, the channel search may be further carried out, efficiently, by the settop box.

Reference will now be made of a method for providing multiplex digital broadcasts according to the invention.

First, a multiplex digital broadcasting method in a settop box will be described.

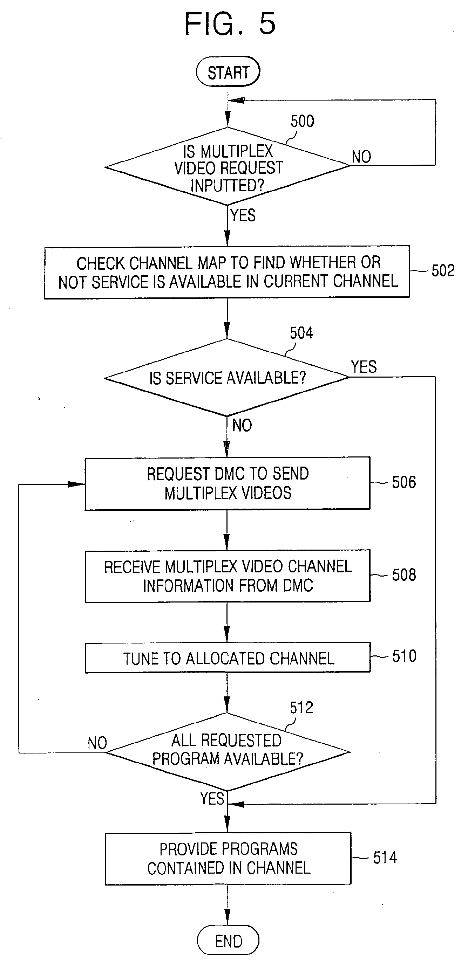

FIG. 5 is a flowchart illustrating a process for receiving multiplex broadcasting in a settop box.

In step 500 of FIG. 5, a multiplex digital broadcasting apparatus in the settop box receives a multiplex video request message or a program selection message from a user, which requests a plurality of programs. The program selection message can be inputted via the user interface 330 as shown in FIG. 3.

In step 502, the multiplex digital broadcasting apparatus searches for a channel containing all of the programs requested by the program request message. This step can be executed by using a channel map contained in the program guide information.

In step 504, the multiplex digital broadcasting apparatus judges whether or not it is possible to provide the programs requested by the user. Step 504 is enabled if an existing corresponding channel is found in step 502 above, or disabled if an existing corresponding channel is not found. If service is available, that is, a corresponding channel exists among the currently provided channels, the requested programs are provided to the user via the existing corresponding channel. These programs can be provided in a specific format (e.g., PIP, PVR and multiroom formats) desired by the user.

Steps 506 to 512 are executed if there is no existing channel containing all of the programs requested by the user among the currently provided channels, as a result of steps 502 and 504, above.

In step 506, the multiplex digital broadcasting apparatus of the settop box transmits a broadcast request message to the DMC, requesting the DMC to provide a multiplex video channel containing all of the programs selected by the user. In step 508, the multiplex digital broadcasting apparatus of the settop box receives program guide information from the DMC. The program guide information includes channel information that is provided in response to the broadcast request message. In step 510, the multiplex digital broadcasting apparatus of the settop box tunes to the corresponding channel containing all of the programs selected by the user by using the program guide information.

In step 512, the multiplex digital broadcasting apparatus of the settop box judges whether or not there is an error in the channel provided by the DMC. If it is judged that the channel has an error, that is, not all the requested programs are available, the multiplex digital broadcasting apparatus of the settop box repeats step 506 above to transmit a broadcast request message to the DMC. If all the requested programs are available in the channel as a result of step 512 above, the multiplex digital broadcasting apparatus of the settop box executes step 514 to provide the requested programs to the user via the channel.

Although not shown in FIG. 5, upon receiving a broadcast request message from the settop box, the DMC may transmit a channel unavailable message informing that the corresponding channel is unavailable to the settop box. Upon receiving the message, the settop box may output a message to the user, informing that the requested programs are unavailable.

Reference will now be made of a multiplex digital broadcasting method in a DMC.

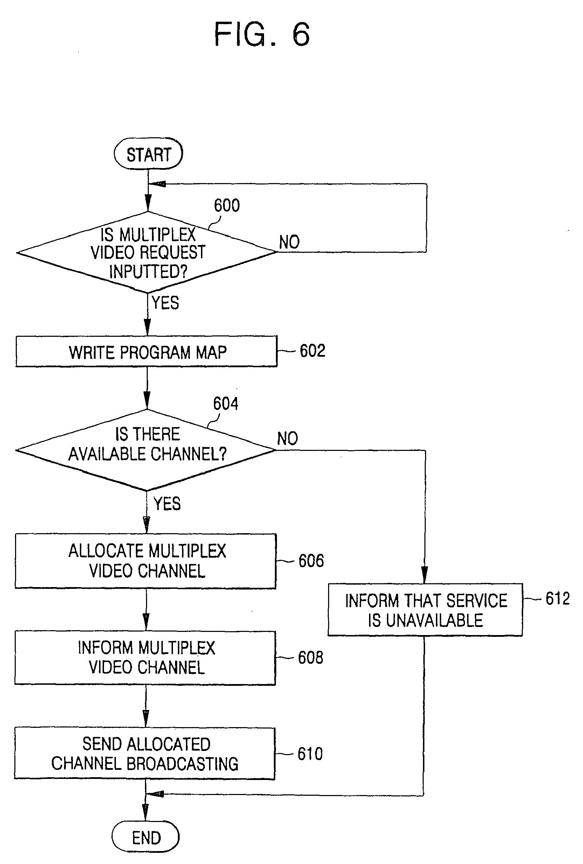

FIG. 6 is a flowchart illustrating a multiplex broadcasting process in a DMC.

In step 600 of FIG. 6, the multiplex digital broadcasting apparatus of the DMC receives a broadcast request message from the settop box, which requests a plurality of programs. In step 602, the multiplex digital broadcasting apparatus of the DMC writes a program map according to the broadcast request message. In step 604, the multiplex digital broadcasting apparatus of the DMC judges whether or not there is an idle channel that can be generated into a channel containing the requested programs.

If there is no idle channel available, the multiplex digital broadcasting apparatus of the DMC transmits a message to the settop box, informing that the requested programs are unavailable. This means that the requested service is unavailable.

If there is an idle channel for generating a channel containing the requested programs, the multiplex digital broadcasting apparatus of the DMC executes steps 606 to 610.

In step 606, the multiplex digital broadcasting apparatus of the DMC allocates all of the requested programs to the idle channel. In step 608, the multiplex digital broadcasting apparatus of the DMC transmits program guide information including the information of the allocated channel to the settop box. In step 610, the multiplex digital broadcasting apparatus of the DMC sends the allocated channel.

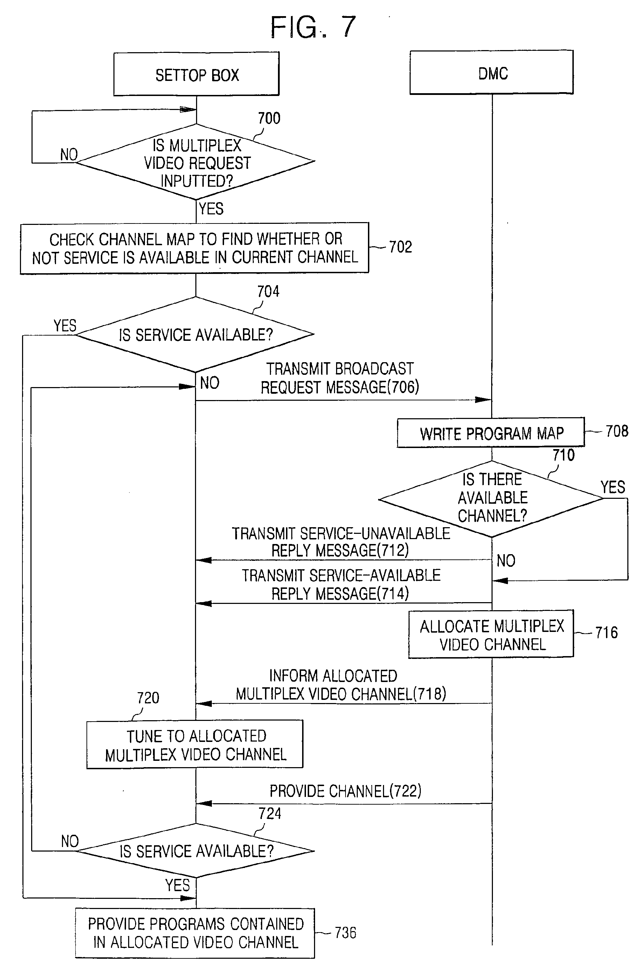

FIG. 7 is a flowchart illustrating message flows between a settop box and a DMC according to the invention.

Since a large number of process steps in FIG. 7 are substantially the same as in the settop box of FIG. 5 or the DMC of FIG. 6, the process of FIG. 7 will not described in detail, except message flows between the settop box and the DMC, as will be described below.

In step 706, the settop box transmits a broadcast request message to the DMC. The broadcast request message includes identification information of the settop box transmitting the request message and program information of programs that the settop box requests to be provided. Upon receiving the broadcast request message, the DMC confirms whether or not there is an idle channel that can be converted into a channel for providing the programs requested by the broadcast request message.

If there is no idle channel available, the DMC transmits a service-unavailable reply message informing that requested service is unavailable to the settop box, in step 712.

If there is an idle channel, the DMC transmits a service-available reply message informing that requested service is available to the settop box, in step 714. In this case, of course, the judgment regarding service availableness can be made out synthetically by judging other factors such as the existence of a channel that contains all of the requested programs in currently serviced channels in addition to the existence of an idle channel.

If there is an idle channel, the DMC generates a multiplex video channel by allocating all of the programs requested by the settop box to the idle channel, in step 716. The DMC transmits a message to the settop box, providing channel information of the channel to which all of the programs requested by the settop box are allocated, in step 718. Upon receiving the channel information, the settop box can tune to the allocated channel based upon the channel information to receive the programs contained in the channel. Then, the DMC provides channel broadcasts with the programs requested by the settop box all of which are allocated to the channel, in step 722.

As described hereinbefore, the present invention makes it possible to provide digital multiplex broadcasts requested by a user by using a single tuner, so that the user can receive a plurality of desired programs by using a settop box having a single tuner while being provided with various types of multiplex broadcasts such as PIP, PVR and multiroom functions by using the received programs.

According to the invention as described above, a plurality of requested broadcasts can be provided to a broadcast audience with a settop box having a single tuner. Thus, the invention can realize multiplex broadcasting for supporting PIP, PVR or multiroom function by using a settop box having a single tuner. Furthermore, by using only one tuner, the invention can lower internal complexity of a settop box to simplify its design while saving cost. Moreover, by reducing the number of tuners used for a settop box, the invention can lower ElectroMagnetic Interference (EMI) noises.

While the present invention has been shown and described in connection with the preferred embodiments, it will be apparent to those skilled in the art that modifications and variations can be made without departing from the spirit and scope of the invention as defined by the appended claims.

## Claims

1. An apparatus for providing multiplex digital broadcasting in a digital media center, comprising:
a receiver for receiving a broadcast request message requesting a plurality of user requested programs from a settop box;
a controller for generating a single channel containing all of the programs requested by the broadcast request message; and
an output unit for outputting said channel to the settop box.

2. The apparatus according to claim 1, further comprising a guide information provider for generating and providing program guide information including that of said channel to the settop box.

3. The apparatus according to claim 2, wherein the guide information provider is adapted to provide the program guide information in a format of Program Association Table (PAT) or Program Map Table (PMT).

4. The apparatus according to claim 1, wherein the controller is adapted to generate said channel by allocating all of the requested programs to an idle channel.

5. The apparatus according to claim 4, wherein the controller is adapted to, if there is no idle channel available to be converted into said channel containing all of the requested programs, provide a message informing that the requested programs are unavailable to the settop box via the output unit.

6. The apparatus according to claim 1, wherein the controller is adapted to relocate programs provided through existing channels to generate said channel containing all of the requested programs.

7. The apparatus according to claim 6, wherein the program relocation is carried out by exchanging, increasing or reducing programs allocated to other channels.

8. The apparatus according to claim 1, wherein the controller is adapted to search currently provided channels to find said channel containing all of the programs requested by the broadcast request message, if said channel containing all of the requested programs exists, provide said channel, and if said channel does not already exist, generate said channel containing all of the requested programs.

9. The apparatus according to claim 8, wherein the controller is adapted to, if said channel containing all of the requested programs does not exist or no idle channel to be converted into said channel exists, provide a message informing that the requested programs are unavailable to the settop box via the output unit.

10. The apparatus according to claim 1, wherein the broadcast request message at least contains identification information of the settop box transmitting the request message and requested channel information.

11. An apparatus for providing multiplex digital broadcasting in a settop box, comprising:
an input unit for receiving a broadcast selection message including a plurality of requested programs from a user;
a tuner for tuning to channels from a Digital Media Center (DMC); and
a controller for generating a broadcast request message requesting a channel containing all of the requested programs, transmitting the broadcast request message to the DMC, receiving channel information provided by the DMC in response to the broadcast request message, and controlling the tuner to tune to said channel.

12. The apparatus according to claim 11, wherein the controller is adapted to search currently provided channels to find said channel containing all of the requested programs, and if said channel is found, control the tuner to tune to said channel, and if said channel is not found, generate and transmit the broadcast request message to the DMC.

13. The apparatus according to claim 12, wherein the controller is adapted to search for said channel containing all of the requested programs based upon program guide information provided by the DMC.

14. The apparatus according to claim 13, wherein the program guide information is provided in a format of Program Association Table (PAT) or Program Map Table (PMT).

15. The apparatus according to claim 11, wherein the controller is adapted to, if a message received from the DMC in response to the broadcast request message informs that the requested programs are unavailable, provide a message to the user informing that the requested programs are unavailable.

16. The apparatus according to claim 11, wherein the controller is adapted to provide the programs requested by the user in a format requested by the user, which is contained in the broadcast selection message.

17. A method for providing multiplex digital broadcasting in a digital media center, the method comprising steps of:
receiving a broadcast request message from a settop box that requests a plurality of programs;
generating a channel containing all of the programs requested by the request message; and
transmitting said channel to the settop box.

18. The method according to claim 17, further comprising:
generating and providing program guide information including that of said channel to the settop box.

19. The method according to claim 18, wherein the program guide information is provided in a format of Program Association Table (PAT) or Program Map Table (PMT).

20. The method according to claim 17, wherein the channel generating step comprises allocating all of the requested programs to an idle channel.

21. The method according to claim 20, further comprising:
if there is no idle channel to be converted into said channel containing all of the programs requested, providing a message informing that the requested programs are unavailable to the settop box.

22. The method according to claim 17, wherein the channel generating step comprises relocating programs provided through existing channels.

23. The method according to claim 22, wherein the program relocation is enabled by exchanging, increasing or reducing programs allocated to other channels.

24. The method according to claim 17, further comprising:
searching currently provided channels to find said channel containing all of the programs requested by the broadcast request message, if there is said channel, providing said channel, and if there is not said channel, generating said channel containing all of the programs requested.

25. The method according to claim 24, further comprising:
if there is no said channel containing all of the requested programs nor an idle channel to be converted into said channel containing all of the requested programs, providing a message informing that the requested programs are unavailable to the settop box.

26. A method for providing multiplex digital broadcasting in a settop box, the method comprising steps of:
receiving a broadcast selection message from a user, the message requesting a plurality of programs and instructing an output format of the requested programs;
generating a broadcast request message requesting a channel containing all of the programs requested by the broadcast selection message, transmitting the broadcast request message to a Digital Media Center (DMC), and receiving program guide information including channel information provided by the DMC in response to the broadcast request message;
receiving a channel provided by the DMC based upon the broadcasting guide information; and
outputting the requested programs contained in the received channel according to the requested output format.

27. The method according to claim 26, further comprising:
searching currently provided channels based upon the program guide information provided by the DMC for said channel containing all of the requested programs; and
if said channel does not exist, executing the step of generating and transmitting a broadcast request message.

28. The method according to claim 26, further comprising:
informing the user that the requested programs are unavailable, if a message informing that the requested programs are unavailable is received from the DMC in response to the broadcast request message.

29. The method according to claim 26, wherein the output format is to provide at least one selected from a group consisting of Picture In Picture (PIP), Perception Video Recorder (PVR) and multiroom functions.
